# EUROPÄISCHE PATENTSCHRIFT

(11) **EP 2 212 133 B1**
(45) Veröffentlichungstag und Bekanntmachung des Hinweises auf die Patenterteilung: **04.10.2017**
(21) Anmeldenummer: 08841675.5
(22) Anmeldetag: 23.10.2008
(51) Int. Cl.: B60G 17/016, B60G 17/0165, B60G 17/018, B60G 17/06, B60W 40/10, B60W 10/22, B60W 40/06

(54) **VERFAHREN ZUR BEEINFLUSSUNG DER BEWEGUNG EINES IN SEINEN BEWEGUNGSABLÄUFEN STEUERBAREN ODER REGELBAREN FAHRZEUGAUFBAUS EINES KRAFTFAHRZEUGES**
METHOD FOR INFLUENCING THE MOVEMENT OF A MOTOR VEHICLE BODY, THE CHAIN OF MOVEMENTS OF WHICH CAN BE CONTROLLED OR ADJUSTED
PROCÉDÉ DESTINÉS À INFLUENCER LE MOUVEMENT D'UNE STRUCTURE DE VÉHICULE MOTORISÉ POUVANT ÊTRE COMMANDÉE OU RÉGULÉE DANS SES PROCESSUS DE MOUVEMENT

(30) Priorität: 26.10.2007 DE 102007051218
(43) Veröffentlichungstag der Anmeldung: 04.08.2010
(73) Patentinhaber: Volkswagen Aktiengesellschaft, 38440 Wolfsburg (DE)
(72) Erfinder: ARENZ, Andrea, 38458 Velpke (DE)
(86) Internationale Anmeldenummer: PCT/EP2008/008984
(87) Internationale Veröffentlichungsnummer: WO 2009/053075

(56) Entgegenhaltungen:
- EP-A- 0 275 664
- EP-A- 1 787 834
- DE-A1- 3 408 292
- DE-A1- 3 918 735
- DE-A1- 4 039 629
- DE-A1- 4 217 325
- DE-A1- 4 323 552
- DE-A1- 10 019 763
- DE-A1- 10 327 593
- DE-A1- 10 353 692
- DE-A1- 19 600 724
- DE-A1-102005 014 237
- DE-A1-102005 062 285
- DE-A1-102005 062 286
- JP-A- 7 228 114
- US-A- 5 096 219

## Beschreibung

Die Erfindung betrifft ein Verfahren zur Erzeugung von Signalen zur Beeinflussung der Bewegung eines in seinen Bewegungsabläufen steuerbaren oder regelbaren Fahrzeugaufbaus eines Kraftfahrzeuges, wobei sensorisch die Bewegung des Fahrzeugaufbaus ermittelt wird, die den ermittelten Sensorwerten entsprechenden Sensorsignale einem Dämpferregler zugeführt werden, der Dämpferregler wenigstens ein Steuersignal zur Ansteuerung von Aktuatoren, insbesondere von semiaktiven oder aktiven Dämpfern, liefert, mittels denen die Bewegung des Fahrzeugaufbaus beeinflusst werden kann.
Verfahren der gattungsgemäßen Art sind bekannt. So ist beispielsweise aus DE 39 18 735 A1 ein Verfahren und eine Vorrichtung zur Dämpfung von Bewegungsabläufen an Fahrwerken von Personen- und Nutzkraftfahrzeugen bekannt, bei denen aus einer sensorisch ermittelten Bewegung zweier Fahrzeugmassen mittels einer Signalverarbeitungsschaltung ein Steuersignal für einen steuerbaren, an den Fahrzeugmassen angreifenden Aktuator gebildet wird. Für eine komfortable und dennoch sichere Fahrwerkabstimmung ist vorgesehen, die sensorisch ermittelten Signale über eine der Signalverarbeitungsschaltung angehörenden Schaltungsanordnung mit frequenzabhängigem Übertragungsverhalten zu leiten. Hierdurch soll erreicht werden, dass aufgrund der frequenzabhängigen Verarbeitung der Sensorsignale keine statische Kennlinie für die Aktuatorsteuerung beziehungsweise Aktuatorregelung eingesetzt wird, sondern eine von dem Frequenzinhalt des Bewegungsablaufs abhängige Aktuatorsteuerung beziehungsweise Aktuatorregelung erfolgt. Hierdurch soll das Ziel eines möglichst hohen Fahrkomforts bei einer auch in Grenzbereichen des Fahrzustandes sicheren Auslegung des Fahrwerks erzielt werden. Diesem Ansatz liegt der Gedanke zugrunde, dass dem Zielkonflikt zwischen gewünschtem Fahrkomfort, das heißt komfortable und weiche Auslegung, und Fahrdynamik, das heißt sportliche und straffe Abstimmung, einerseits und einer ausreichenden Fahrsicherheit andererseits entsprochen werden soll. Für Fahrkomfort und Fahrdynamik ist eine Dämpfung der Bewegung des Aufbaus entscheidend, während für eine Fahrsicherheit eine Radlast beziehungsweise Radlastschwankung entscheidend ist.

Bekannt sind im Wesentlichen drei Dämpfersysteme für Fahrzeuge, wobei einer Federanordnung zwischen Rad und Aufbau ein Aktuator parallel geschaltet ist. Bekannt sind passive, semi-aktive und aktive Dämpfersysteme. Bei passiven Dämpfersystemen ist eine Veränderung der Dämpferkraft während des Fahrbetriebes nicht vorgesehen. Bei semi-aktiven Dämpfersystemen kann die Dämpferkraft durch eine Veränderung eines Ölfluidstromes unter Verwendung eines oder mehrerer Ventile verändert werden. Auf diese Art und Weise können die Dämpfungseigenschaften verändert werden. Semi-aktive Dämpfersysteme arbeiten rein energieabsorbierend. Bei aktiven Dämpfersystemen kann eine gewünschte Dämpferkraft sowohl dämpfend als auch energieeinbringend in jede Richtung bereitgestellt werden.

Die Lage und die Bewegung eines allgemeinen Körpers im Raum wird allgemein über drei Achsen eines (räumlichen kartesischen) Koordinatensystems beschrieben: Längsachse (auch Rollachse, Kürzel x), Querachse (Nickachse, Kürzel y) und Hochachse (Gierachse, Kürzel z).

Als Längsachse wird generell jene Achse eines Körpers bezeichnet, die der Richtung seiner größten Ausdehnung entspricht. Bei einem Fahrzeug kennzeichnet diese Achse auch die Fahrtrichtung. Unter Wankachse versteht man die Verbindungslinie durch die Wankzentren von Vorder- und Hinterachse. Bei Kurvenfahrt neigt sich ein Fahrzeug aufgrund der Fliehkraft nach außen. Der Punkt, um den der Aufbau (die Karosserie) kippt, wird als Wankzentrum bezeichnet. Der Abstand der Wankachse zum Schwerpunkt bestimmt die Seitenneigung des Aufbaus. Unter Schwerpunkt soll der Punkt verstanden werden, an dem die Masse eines Körpers die gleiche Wirkung auf andere Körper hätte wenn sie in diesem Punkt vereint wäre. Er wird in der Regel für den stationären Fall angegeben, das heißt für stillstehende Fahrzeuge auf einer ebenen, neigungsfreien Fläche. Bei Geradeausfahrt fällt die Wankachse generell mit der Längsachse zusammen. Die Nickachse ist die Achse senkrecht auf Längs- und Gierachse und verläuft durch deren Schnittpunkt. Als Gierachse bezeichnet man die vertikale Achse durch den Schwerpunkt eines allgemeinen Fahrzeugs, um die der Fahrer sein Fahrzeug mit Hilfe von Steuermechanismen (wie zum Beispiel eine Lenkung) dreht.

Die drei Grund-Rotationsbewegungen eines Körpers im Raum werden generell mit Wanken, Nicken und Gieren bezeichnet. Die dazugehörigen Winkel heißen Wank-, Nick- und Gierwinkel. Unter der Winkelgeschwindigkeit (auch Rotationsgeschwindigkeit genannt) versteht man die zeitliche Änderung des Drehwinkels bei einer Kreisbewegung (Rotation). Vereinfacht gesagt gibt sie an, wie schnell sich etwas dreht.

Die Drehbewegung heißt auch Gieren. Die Gierrate beziehungsweise Giergeschwindigkeit bezeichnet bei einem Fahrzeug die Winkelgeschwindigkeit der Drehung um die Hochachse. Nicken bezeichnet die Bewegung eines Fahrzeugs um seine Quer-/Nickachse, wobei sich die Neigung der Längsachse verändert. Wanken (oder Rollen) bezeichnet die Bewegung um die Längsachse, wobei sich die Neigung der Querachse verändert.

Die Zusammenfassung von Hub, Nicken und Wanken in einem Punkt wird generell auch als Modalbewegung in diesem Punkt bezeichnet. Im Allgemeinen wird sie auf den unveränderlichen (statischen) Fahrzeugschwerpunkt bezogen. Betrachtet man nun beispielsweise einen Stoßdämpfer, so liegt seine Wirkrichtung im Wesentlichen entlang der z-Achse. Er dient somit im Wesentlichen dazu sogenannte Hubbewegungen des Aufbaus in z-Richtung zu dämpfen. Jeder einzelne Stoßdämpfer wirkt nur in Hubrichtung an seiner Position. Bedingt durch die Anordnung von meist je einem Stoßdämpfer an jeder Fahrzeugecke kann nun eine Gesamtbewegung des Aufbaus im Schwerpunkt beeinflusst werden, die sich aus Hub-, Nick- und Wankanteilen zusammensetzt. Zusammenfassend kann festgehalten werden, dass Bewegungen des Aufbaus in z-Richtung somit entweder durch die einzelnen Hubbewegungen an jeder Fahrzeugecke beschrieben werden können oder durch eine kombinierte Hub-, Wank- und Nickbewegung, zum Beispiel im Schwerpunkt des Aufbaus. Entsprechend kann eine Regelung des Aufbaus zum Beispiel unter Verwendung von elektronischen Stoßdämpfern entweder über die Hubbewegung an den Fahrzeugecken erfolgen oder über die Modalbewegung im Aufbau-Schwerpunkt. Der erstgenannte Ansatz ist eventuell physikalisch genauer, berücksichtigt jedoch die Komfortansprüche der Insassen deutlich weniger. Der Fahrer sitzt meist nahe dem Fahrzeugschwerpunkt; seine Bewegungsempfindungen werden daher stark geprägt durch die Hub-, Wank- und Nickbewegungen in diesem Punkt. Beim Stand der Technik wird fast ausschließlich auf den letztgenannten Ansatz zurückgegriffen.

Die hierzu bekannte Vorgehensweise kann wie folgt beschrieben werden: bestimme die Modalbewegungen im Aufbauschwerpunkt, regle entsprechend der Modalbewegung, transformiere abschließend die resultierenden Stellgrößen von der Modalform im Schwerpunkt in die reine Hubform an den Aktorpositionen. Es werden somit durch vorzugsweise in der Nähe des stationären Schwerpunkte des Aufbaus die modalen Bewegungen gemessen, anschließend mittels eines Reglers die zur Beruhigung der modalen Bewegungen notwendigen Größen im Schwerpunkt bestimmt und schließlich die so bestimmten Werte auf die Stellen am Aufbau umgerechnet, an denen die Dämpfer an dem Aufbau angreifen.

Die Annahme eines konstanten (statischen) Schwerpunktes ist meist nur gültig für freie Schwingungen. Die Modalachsen für Wanken und Nicken liegen in diesem Fall stets in dem festgelegten Schwerpunkt. Bei erzwungenen Schwingungen, wie sie zum Beispiel von der Straßenoberfläche aufgeprägt werden, verliert dieser Ansatz jedoch zunehmend an Gültigkeit; die Lage der Modalachsen wird wesentlich durch die Anregung aufgeprägt und kann beliebig (im und außerhalb des Aufbaus) liegen. Mit zunehmender Entfernung der tatsächlichen modalen Achsen vom Fahrzeugschwerpunkt steigt auch der Anteil der Fehlregelung, da die um den statischen Schwerpunkt angenommenen Bewegungen immer weniger mit den tatsächlichen Aufbaubewegungen korrelieren. Entsprechen wird für die jeweiligen Aktorpositionen eine falsche Stellgröße berechnet.

Dies soll anhand eines Beispiels verdeutlicht werden. Nimmt man an, dass ein Fahrzeug mit seinen Vorderrädern eine steile Rampe hochfährt, während seine Hinterräder (noch) waagrecht weiterfahren, so wird für die beiden vorderen Eckpunkte des Aufbaus eine vertikale Bewegung erzwungenen, die zu einer Beschleunigung und schließlich zu einer bestimmten Geschwindigkeit des Aufbaus in Höhe der Vorderachse des Fahrzeugs führt. Nimmt man an, dass die beiden vorderen Eckpunkte eine Geschwindigkeit von "2" haben, so wird nach dem Stand der Technik unter der Voraussetzung, dass der Schwerpunkt des Fahrzeugs in der Mitte zwischen den beiden Fahrzeugachsen liegt, wie folgt gerechnet. Das Fahrzeug dreht sich mit einer Geschwindigkeit von "1" um die durch den Schwerpunkt gehende Querachse des Fahrzeuges, wobei die Vorderachse eine Geschwindigkeit von "+1" und die Hinterachse eine Geschwindigkeit von "-1" hat. Als Hub im Schwerpunkt wird der Wert "1" errechnet. Entsprechend dieser Berechnung gemäß dem Stand der Technik wird dann auch die Dämpfung geregelt, indem beispielsweise die aktiven Dämpfer an den Achsen den errechneten Bewegungen entgegenwirken. Es wird also auch auf die Hinterachse eine Kraft ausgeübt, obwohl diese keine Geschwindigkeit in vertikaler Richtung hat.

Aus DE 40 39 629 A1 ist ein System zur Erzeugung von Signalen zur Steuerung oder Regelung eines steuerbaren oder regelbaren Fahrwerkes bekannt, bei dem die relativen Bewegungen zwischen Radeinheiten und dem Aufbau eines Fahrzeuges erfasst werden und aus den diese Bewegungen repräsentierenden Signalen weitere Signale derart erzeugt werden, dass kollektive Aufbaubewegungen, wie Hub-, Nick- und Wankbewegungen, getrennt voneinander einstellbar sind.

Aus DE 42 17 325 A2 sind ein Verfahren und eine Vorrichtung zur Erzeugung von Signalen zur Steuerung oder Regelung eines steuerbaren oder regelbaren Fahrwerkes bekannt, bei denen ebenfalls die relativen Bewegungen zwischen Radeinheiten und dem Aufbau eines Fahrzeuges erfasst werden und durch die diese Bewegungen repräsentierenden Signale und die Längs- und/oder Querbewegung des Fahrzeuges repräsentierende Signale unter Berücksichtigung von Kenngrößen der Federungs- und/oder Dämpfungselemente eines Aufhängungssystems des Fahrzeuges die aktuell vorliegenden Modalgeschwindigkeiten (Hub-, Nick- und Wankgeschwindigkeit) des Fahrzeugaufbaus ermittelt werden. Die aktuell vorliegenden Modalgeschwindigkeiten des Fahrzeugaufbaus sind hierbei abhängig von der geometrischen Verteilung der Masse des Fahrzeugs und/oder abhängig von Parametern, welche die Aufhängungssysteme charakterisieren, wie Hub-, Nick- und Wankgeschwindigkeit des Fahrzeugaufbaus oder Wankgeschwindigkeit und Vertikalgeschwindigkeit des Fahrzeugaufbaus an der vorderen und hinteren Achse.

Schließlich sind aus DE 10 2005 062 285 A1 eine Vorrichtung und ein Verfahren zur Schätzung der Schwerpunktlage bei einem Fahrzeug bekannt, bei denen für unterschiedliche Fahrzustände des Fahrzeuges mehrere, die Schwerpunktlage des Fahrzeuges repräsentierende Schwerpunktlagengrößen berechnet werden.

JP 7 228 114 A offenbart die Bewegung eines Fahrzeugaufbaus mittels eines Dämpferreglers zu beeinflussen, wobei aus Sensorsignalen eine Hub-, Wank- oder Nickbewegung des Fahrzeugaufbaus in einem stationären Punkt des Fahrzeugaufbaus beeinflusst wird.

Der Erfindung liegt die Aufgabe zugrunde, ein Verfahren zur Beeinflussung der Bewegung eines Fahrzeugaufbaus anzugeben, mit dem eine größtmögliche Beruhigung des Fahrzeugaufbaus für eine komfortable Fahrweise möglich ist.
Erfindungsgemäß wird die Aufgabe durch ein Verfahren mit den in Anspruch 1 genannten Merkmalen gelöst, Dadurch, dass der Dämpferregler die Hub-, Wank- oder Nickbewegung um einen variablen Punkt des Fahrzeugaufbaus in Abhängigkeit der momentanen Bewegung des Fahrzeugaufbaus festlegt, wobei der Dämpferregler die Winkelgeschwindigkeit des Fahrzeugaufbaus um einen von der momentanen Bewegung des Fahrzeugaufbaus abhängigen Schwerpunkt des Fahrzeugaufbaus beeinflusst, ist vorteilhaft möglich, eine sehr komfortable Bewegung des Fahrzeugaufbaus zu erreichen.

In ihrem Kern bildet das erfindungsgemäße Verfahren eine Abkehr von der gemäß dem Stand der Technik vorgenommenen Betrachtungsweise der an einem beweglichen Körper gemessenen Bewegungen. Bisher wurde immer davon ausgegangen, dass es sich bei dem Körper, insbesondere Aufbau eines Fahrzeugs, um einen Gegenstand handelt, der sich um seinen stationären Schwerpunkt bewegt, vorzugsweise dreht. Die Bewegungen des Aufbaus wurden somit im Wesentlichen auf den stationären Schwerpunkt bezogen, in dessen Bereich der Fahrer sich befindet. Diese Betrachtungsweise wird objektiv der Bewegung des Aufbaus nicht gerecht und führt dementsprechend in vielen Fällen zu Steuerungsmaßnahmen, die für die Beruhigung der Bewegung des Aufbaus wenig hilfreich sind. Das gilt nicht nur für semi-aktive Dämpfer sondern insbesondere auch für aktive Dämpfer.

Wenn sich die Vorderachse eines Fahrzeugs hebt während die Hinterachse ruhig bleibt, so führt die Betrachtungsweise gemäß dem Stand der Technik zu falschen Steuermaßnahmen, da das bekannte Verfahren die gemessenen Werte so interpretiert, dass die Vorderachse sich gegenüber dem stationären Schwerpunkt etwas hebt während die Hinterachse sich etwas senkt. Das erfindungsgemäße Verfahren geht demgegenüber nicht davon aus, dass die modalen Dreh- und Hubbewegungen sich um den stationären Schwerpunkt bewegen.

Im Prinzip verzichtet also das erfindungsgemäße Verfahren darauf, die Bewegungen des Aufbaus immer auf den stationären Schwerpunkt des Fahrzeugs zu beziehen. Vielmehr lässt es die Erfindung zu, dass die Bewegungsachsen, insbesondere die Nick- und die Wankachse, auch außerhalb des stationären Schwerpunktes des Aufbaus liegen können, was sie in der Praxis aufgrund der von der Straße ausgeprägten Kräfte vielfach auch tun. Das erfindungsgemäße Verfahren lässt somit zu, dass der Schwerpunkt sich hinsichtlich der Bewegungen des Fahrzeuges verschieben kann und ermöglicht somit optimale Reaktionen zur Beruhigung der Bewegung des Aufbaus. Mit anderen Worten wirkt das erfindungsgemäße Verfahren in einer Weise, die eine Verschiebung der Bewegungsachsen, insbesondere der Nick- und Wankachse, aufgrund der veränderlichen Lage des Schwerpunktes berücksichtigt, was zu einer Optimierung der Beruhigung des Fahrzeugaufbaus führt.

Unter der Formulierung " beliebige Hubbewegungen und/oder Drehbewegungen" ist nur die Größe oder Richtung der Bewegungen zu verstehen, nicht aber deren Anzahl. Nimmt man den sich bewegenden Körper bzw. den Aufbau eines Fahrzeugs als starr an, so ist die Bewegung eines Körpers im Raum auch weiterhin schon durch die Angabe der Bewegung an drei definierten Punkten bestimmt. Das erfindungsgemäße Verfahren ist somit in keiner Weise komplizierter als das Regelungssystem gemäß dem Stand der Technik und erfordert auch keinen größeren technischen Aufwand.

Vielfach ist es aus Gründen der Regelungstechnik sinnvoll, nicht jede Lage des Schwerpunktes, und damit auch der Bewegungsachsen, zuzulassen. So macht es beispielsweise wenig Sinn, bei vier etwa gleichgroßen Hubbewegungen an den Fahrzeugecken eine quasi im Unendlichen liegende Drehachse anzunehmen und das Fahrzeug an allen Ecken entsprechend stark zu dämpfen. Um die Lage des Schwerpunktes und damit der Drehachse in geeigneter Weise einzuschränken ist in bevorzugter Ausgestaltung der Erfindung vorgesehen, dass für die Bestimmung der Bewegungen eines Körpers hinsichtlich des Schwerpunkts dieser Bewegungen nur ein bestimmter örtlicher Bereich zugelassen wird.

In weiterer bevorzugter Ausgestaltung der Erfindung ist vorgesehen, dass durch Subtraktion eines gleichgroßen Hubes an den vier Eckpunkten des Fahrzeugs die Lage des Schwerpunktes und der Drehachsen derart transformiert wird, so dass diese sich dem Körper nähern oder in den Körper selbst wandern.

Zur Bestimmung der zur Beruhigung des Aufbaus dienenden Kräfte ist darüber hinaus in bevorzugter Ausgestaltung der Erfindung vorgesehen, dass unter Bezugnahme auf den vorher festgelegten Schwerpunkt die Bewegung an geeigneten Punkten des Körpers beziehungsweise Aufbaus bestimmt wird, wonach dann auf Grund der so festgestellten Bewegungen, zum Beispiel an den Aufbauecken, Maßnahmen zur Dämpfung des Aufbaus ergriffen werden können.

Ferner ist in einer weiteren bevorzugten Ausgestaltung der Erfindung vorgesehen, dass der Schwerpunkt der Bewegungen (insbesondere Hub- und Drehbewegungen) in den statischen beziehungsweise stationären Schwerpunkt des Körpers, insbesondere Aufbaus, gelegt wird. Falls dies erwünscht ist, lässt sich in weiterer bevorzugter erfindungsgemäßer Ausführung der Drehpunkt des Körpers in seinen statischen Schwerpunkt verlegen, wie dies bei den bekannten Verfahren gemäß des Standes der Technik der Fall ist. Dabei wird in Form eines Offsets so viel Hub von den gemessenen modalen Bewegungen abgezogen, bis sich in Bezug auf den Schwerpunkt eine reine Drehbewegung ergibt.

Für den Fall, dass kein Hub-Anteil von der Bewegung abgezogen wird ist in weiterer bevorzugter Ausgestaltung der Erfindung vorgesehen, dass die Drehachsen für die modalen Bewegungen an beliebigen Stellen liegen können, wobei es allerdings zweckmäßig sein kann die möglichen örtlichen Lagen dieser Achsen zu beschränken.

Durch Kombinationen, insbesondere Linearkombination der Verfahren, bei denen ein Maximum an Hubanteilen herausgerechnet wird und alle Hubanteile in der Gesamtbewegung erhalten bleiben, ist eine erhebliche Flexibilität in der Anpassung eines Regelungssystems zur Dämpfung eines Fahrzeugaufbaus möglich, wodurch sich nicht nur das Verhalten des Regelungssystems an die Parameter der Umgebung (wie Geschwindigkeit des Fahrzeugs, Beladung, Verhalten der Dämpfer Zustand der Straße und ähnliches) anpassen lässt sondern auch die Möglichkeit besteht das Verhalten des Regelungssystems an die Wünsche des Fahrers (komfortabel, sportlich) besser anzupassen.

Weitere bevorzugte Ausgestaltungen ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematisch ein Kraftfahrzeug mit einer Dämpferregelung;
- Figur 2: eine Prinzipskizze eines Kraftfahrzeuges mit vertikalen EckAufbaugeschwindigkeiten;
- Figur 3: eine Prinzipskizze eines Kraftfahrzeuges mit vertikalen ModalAufbaugeschwindigkeiten;
- Figur 4: eine Prinzipskizze eines Kraftfahrzeuges mit variabler Wank- und Nickachse;
- Figur 5: eine Prinzipskizze eines Kraftfahrzeuges mit variabler Wank- und Nickgeschwindigkeit;
- Figur 6: eine Prinzipskizze eines Kraftfahrzeuges mit variablen, auf die Eckpunkt umgerechneten Nickgeschwindigkeiten;
- Figuren 7: eine Prinzipskizze eines Kraftfahrzeuges mit variabler, auf die Eckpunkte umgerechnete Wankgeschwindigkeiten und
- Figur 8: ein Flussdiagramm zur Berechnung der Nickgeschwindigkeiten.

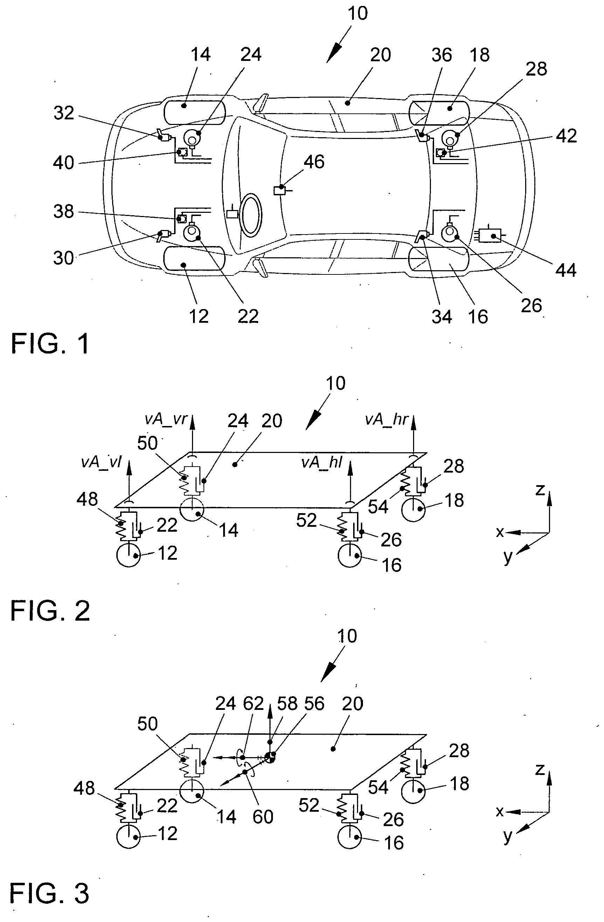

Figur 1 zeigt schematisch in Draufsicht ein insgesamt mit 10 bezeichnetes Kraftfahrzeug. Aufbau und Funktion von Kraftfahrzeugen sind allgemein bekannt, so dass im Rahmen der vorliegenden Beschreibung hierauf nicht näher eingegangen wird.

Das Kraftfahrzeug 10 besitzt vier Räder 12, 14, 16 und 18. Die Räder 12, 14, 16 und 18 sind über eine bekannte Radaufhängung an einem Aufbau 20 des Kraftfahrzeuges 10 befestigt. Unter Aufbau 20 wird im Rahmen der Erfindung allgemein die Fahrzeugkarosserie mit der Fahrgastzelle verstanden. Zwischen den Rädern 12, 14, 16 und 18 einerseits und dem Aufbau 20 ist jeweils ein Dämpfer 22, 24, 26 beziehungsweise 28 angeordnet. Die Dämpfer 22, 24, 26 und 28 sind parallel zu nicht dargestellten Federn angeordnet. Die Dämpfer 22, 24, 26 und 28 sind beispielsweise als semi-aktive Dämpfer ausgebildet, das heißt durch Anlegen eines Steuersignals an ein Stellmittel der Dämpfer kann die Dämpferkraft variiert werden. Das Stellmittel ist üblicher Weise als elektromagnetisches Ventil ausgebildet, so dass das Stellsignal ein Steuerstrom für das Ventil ist.

Jedem Rad beziehungsweise jedem Dämpfer ist ein Wegsensor 30, 32, 34 beziehungsweise 36 zugeordnet. Die Wegsensoren sind als Relativwegsensoren ausgebildet, das heißt diese messen eine Veränderung des Abstandes des Aufbaus 20 von dem jeweiligen Rad 12, 14, 16 beziehungsweise 18. Typischerweise werden hier sogenannte Drehwinkel-Wegsensoren eingesetzt, deren Aufbau und Funktion allgemein bekannt sind.

Der Aufbau 20 umfasst ferner drei an definierten Punkten angeordnete Vertikalbeschleunigungssensoren 38, 40 und 42. Diese Beschleunigungssensoren 38, 40 und 42 sind fest an dem Aufbau 20 angeordnet und messen die Vertikalbeschleunigung des Aufbaus im Bereich der Räder 12, 14 beziehungsweise 18. Im Bereich des linken hinteren Rades 16 kann die Beschleunigung aus den drei anderen Beschleunigungssensoren rechnerisch ermittelt werden, so dass hier auf die Anordnung eines eigenen Beschleunigungssensors verzichtet werden kann.

Die Anordnung der Sensoren ist hier lediglich beispielhaft. Es können auch andere Sensoranordnungen, beispielsweise ein vertikaler Aufbaubeschleunigungssensor und zwei Drehwinkelsensoren oder dergleichen, zum Einsatz kommen.

Das Kraftfahrzeug 10 umfasst ferner ein Steuergerät 44, das über Signal- beziehungsweise Steuerleitungen mit den Stellmitteln der Dämpfer 22, 24, 26 und 28, den Wegsensoren 30, 32, 34 und 36 und den Beschleunigungssensoren 38, 40 und 42 verbunden ist. Das Steuergerät 44 übernimmt die nachfolgend noch näher zu erläuternde Dämpferregelung. Daneben kann das Steuergerät 44 selbstverständlich auch weitere, hier nicht zu betrachtende Funktionen innerhalb des Kraftfahrzeuges 10 übernehmen. Das Kraftfahrzeug 10 umfasst ferner ein Schaltmittel 46, beispielsweise einen Taster, ein Drehrad oder dergleichen, mittels dem von einem Fahrzeugführer eine Anforderung an die Bewegung des Aufbaus 20 gewählt werden kann. Hier kann beispielsweise zwischen der Anforderung "Komfort", der Anforderung "Sport" und der Anforderung "Basis" gewählt werden. Die Wahl ist entweder stufenförmig zwischen den drei Modi oder stufenlos mit entsprechenden Zwischenmodi möglich.

Das Schaltmittel 46 ist ebenfalls mit dem Steuergerät 44 verbunden.

Figur 2 zeigt eine Prinzipskizze des Kraftfahrzeuges 10, wobei hier der Aufbau 20 als ebene Fläche angedeutet ist. An den Ecken des Aufbaus 20 sind jeweils die Räder 12, 14, 16 und 18 über eine Feder-Dämpfer-Kombination in an sich bekannter Art und Weise angeordnet. Die Feder-Dämpfer-Kombination besteht aus den Dämpfern 22, 24, 26 und 28 und jeweils parallel geschalteten Federn 48, 50, 52 und 54. An den Ecken des Aufbaus 20 sind die in Figur 1 dargestellten Beschleunigungssensoren 38, 40 beziehungsweise 42 angeordnet, mittels denen die vertikale Geschwindigkeit an den Ecken des Aufbaus 20 bestimmt werden kann. Hierbei handelt es sich um die Geschwindigkeiten vA_vl (Geschwindigkeit Aufbau vorne links), vA_vr (Geschwindigkeit Aufbau vorne rechts), vA_hl (Geschwindigkeit Aufbau hinten links) und vA_hr (Geschwindigkeit Aufbau hinten rechts). Die Geschwindigkeit kann aus den mittels der Beschleunigungssensoren gemessenen Beschleunigungen durch Integration errechnet werden.

Figur 3 zeigt wiederum die Prinzipskizze des Kraftfahrzeuges 10, wobei gleiche Teile wie in den vorhergehenden Figuren mit gleichen Bezugszeichen versehen und nicht nochmals erläutert sind. In einem Schwerpunkt 56 sind die Modalbewegungen des Aufbaus 20 verdeutlicht. Dies ist einerseits ein Hub 58 in vertikaler Richtung (z-Richtung), ein Nicken 60, das heißt eine Drehbewegung um eine in der y-Achse liegende Querachse, und ein Wanken 62, das heißt eine Drehbewegung um eine in der x-Achse liegende Längsachse des Kraftfahrzeuges 10.

Die in dem Koordinatensystem x, y, z zu regelnden Geschwindigkeiten sind diesmal allerdings nicht die Geschwindigkeiten an den Ecken des Aufbaus sondern Winkelgeschwindigkeiten im Schwerpunkt 56 des Aufbaus 20. Die Regelung soll so ausgelegt werden, dass die Winkelgeschwindigkeiten hinsichtlich Wanken und Nicken sowie zusätzlich noch die vertikale Geschwindigkeit des Hubes minimiert werden. Der Vorteil dieser Art der Regelung besteht darin, dass die Personen im Fahrzeug ungefähr im Bereich des Schwerpunktes 56 sitzen und, da auf die Ruhigstellung dieses Bereiches geregelt wird, einen etwas größeren Fahrkomfort erfahren als bei einer Regelung über die Ecken des Aufbaus. Dies gilt besonders, wenn im Schwerpunkt 56 des Fahrzeuges angeordnete entsprechende Sensoren vorgesehen sind, welche die Wankgeschwindigkeit, die Nickgeschwindigkeit und die Hubgeschwindigkeit direkt messen.

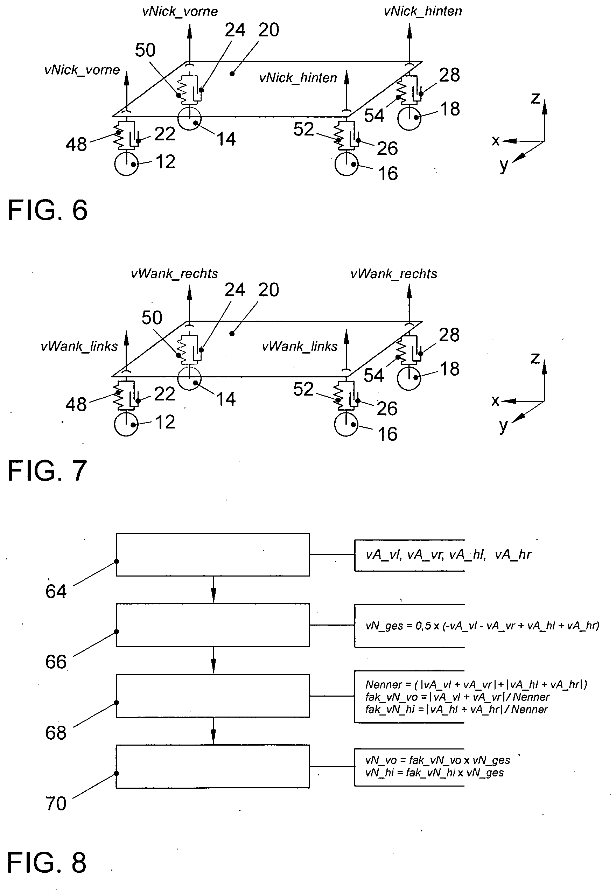

Nimmt man nun an, dass bei der Regelung gemäß Figur 3 ebenfalls auf die Berücksichtigung der vertikalen Geschwindigkeit der Räder 12, 14, 16, 18 verzichtet wird und die zur Messung der genannten Winkelgeschwindigkeiten und des Hubes dienenden Sensoren an den Ecken des Fahrzeugs angeordnete sind, wie in Figur 2, so müssen aus den gemäß Figur 2 gemessenen Geschwindigkeiten an den Ecken des Aufbaus 20 die genannten Winkelgeschwindigkeiten und der Hub im Schwerpunkt 56 berechnet werden. Man kommt dann zu einer Regeleinrichtung, wie sie in Figur 6 dargestellt und im Zusammenhang mit dieser Figur noch näher erläutert wird.

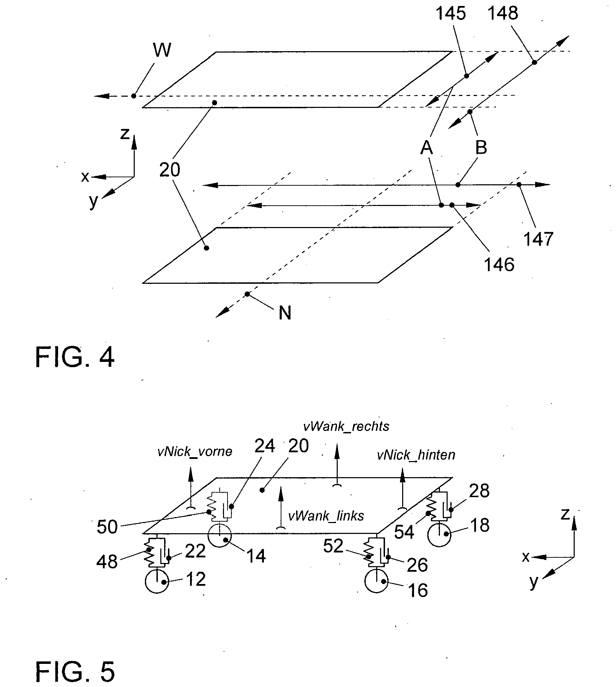

In Figur 4 ist die mögliche Lage von Wankachsen und Nickachsen skizziert. In Figur 4 ist der Aufbau 20 zweimal durch eine perspektivisch dargestellte Fläche angedeutet. Die untere Darstellung bezieht sich auf die variable Nickachse N und die obere Darstellung bezieht sich auf die variable Wankachse W. Die beiden Doppelpfeile 145, 146 deuten die Bewegungsmöglichkeiten der Achsen in einer Fallgestaltung A an. Bei dieser Fallgestaltung bewegt sich die jeweilige Achse innerhalb des Aufbaus 20. Bei der Fallgestaltung B ist es auch möglich, dass entsprechend der Doppelpfeile 147, 148 die Achsen den Aufbau 20 verlassen können. Dabei gilt folgendes: bei der Fallgestaltung A wird ohne Hubanteil gerechnet, das heißt der allen gemessenen Bewegungen gemeinsame Hubanteil wird abgezogen. In diesem Fall kann die Nickachse beziehungsweise Wankachse nur noch innerhalb des Aufbaus 20 parallel zur y-Achsebeziehungsweise x-Achse verlaufen. Dagegen wird bei der Fallgestaltung B der Hubanteil der gemessenen Bewegungen nicht abgezogen. Infolge dessen können die Achsen N und W auch außerhalb des Aufbaus 20 liegen, wobei sie wiederum parallel zur y-Achse beziehungsweise x-Achse verlaufen.

In Figur 5 ist die Berechnung der Nick- und Wank-Geschwindigkeiten angedeutet. Durch nach oben gerichtete Pfeile sind die vordere und hindere Nick-Geschwindigkeit vNick_ vorn, vNick_hinten sowie die linke und rechte Wankgeschwindigkeit vWank _links, vWank_rechts angedeutet. Im einfachsten Fall können an den Angriffspunkten der genannten Pfeile am Aufbau 20 entsprechende Sensoren angebracht sein, mit denen die entsprechenden Geschwindigkeiten gemessen werden können. Diese Sensoren können aber auch an den Angriffspunkten der Dämpfer 22, 24, 26, 28 am Aufbau 20 angeordnet sein. In diesem Fall lässt sich beispielsweise die vordere Nick-Geschwindigkeit vNick_vorn aus der Mittelung der beiden Geschwindigkeiten an den vorderen Ecken berechnen. Entsprechendes gilt für die hintere Nick-Geschwindigkeit vNick_hinten. Die Wankgeschwindigkeiten können dementsprechend aus der Mittelung der linken Eckgeschwindigkeiten beziehungsweise rechten Eckgeschwindigkeiten errechnet werden.

Aus Gründen der Übersichtlichkeit wurden in Figur 5 alle Pfeile gleich lang und nach oben gerichtet gezeichnet. Selbstverständlich werden die Pfeile in der Regel aber aufgrund der unterschiedlichen Geschwindigkeiten unterschiedlich lang sein und können auch in entgegengesetzter Richtung verlaufen.

In den Figuren 6 und 7 wird davon ausgegangen, dass aufgrund von Messungen die Wank- und Nickgeschwindigkeiten an definierten Punkten des Aufbaus 20 bekannt sind, beispielsweise durch Messungen, wie im Zusammenhang mit Figur 5 angegeben. Um nun festlegen zu können, wie die Dämpfer 22, 24, 26, 28 in optimaler Weise für eine schnelle Beruhigung des Aufbaus 20 angesteuert werden können, müssen die Wank- und Nickgeschwindigkeiten an den vier Ecken, wie in den Figuren 6 und 7 gezeigt, bestimmt werden. Die so erkannten Wank- und Nickgeschwindigkeiten werden jeweils an den übereinstimmenden Ecken überlagert, das heißt addiert. In der Regel werden die, die jeweilige Geschwindigkeit kennzeichnenden, Pfeile unterschiedlich lang sein und vielfach in entgegengesetzte Richtung zeigen, wie dies bereits im Zusammenhang mit Figur 5 beschrieben wurde.

Figur 8 beschreibt in Form eines Ablaufdiagramms eine Möglichkeit zur Festlegung der Nickgeschwindigkeiten, wie sie beispielsweise im Zusammenhang mit Figur 6 bestimmt werden können. Dabei ist die Korrekturgröße zum Beispiel gleich dem Absolutwert der Dämpfergeschwindigkeiten. In einem Schritt 64 werden die Aufbaugeschwindigkeiten vA_vl, vA_vr, vA_hl und vA_hr an den vier Ecken des Aufbaus 20 berechnet. In einem nächsten Schritt 66 wird die gesamte Nickgeschwindigkeit vN_ges berechnet, wobei gilt VNges=0,5x(-vA_vl - vA_vr + vA_hl + vA_hr). Dann werden in einem nächsten Schritt 68 die Anteile der Nickgeschwindigkeiten fak_VN_vo und fak_VN_hi für die Vorderachse (Achse durch die Räder 12 und 14) und die Hinterachse (Achse durch die Räder 16 und 18) berechnet. In einem weiteren Schritt werden dann die Nickgeschwindigkeiten des Aufbaus 20 vorne und hinten berechnet. Die Berechnung der Wankgeschwindigkeiten erfolgt vollkommen analog.

### Bezugszeichenliste

- 10: Kraftfahrzeug
- 12: Rad
- 14: Rad
- 16: Rad
- 18: Rad
- 20: Aufbau
- 22: Dämpfer
- 24: Dämpfer
- 26: Dämpfer
- 28: Dämpfer
- 30: Wegsensor
- 32: Wegsensor
- 34: Wegsensor
- 36: Wegsensor
- 38: Beschleunigungssensoren
- 40: Beschleunigungssensoren
- 42: Beschleunigungssensoren
- 44: Steuergerät
- 46: Schaltmittel
- 48: Feder
- 50: Feder
- 52: Feder
- 54: Feder
- 56: Kennlinie
- 58: Hub
- 60: Nicken
- 62: Wanken
- 64: Schritt
- 66: Schritt
- 68: Schritt
- 70: Schritt
- 145: Doppelpfeil
- 146: Doppelpfeil
- 147: Doppelpfeil
- 148: Doppelpfeil

## Patentansprüche

1. Verfahren zur Erzeugung von Signalen zur Beeinflussung der Bewegung eines in seinen Bewegungsabläufen steuerbaren oder regelbaren Fahrzeugaufbaus eines Kraftfahrzeuges, wobei sensorisch die Bewegung des Fahrzeugaufbaus ermittelt wird, die den ermittelten Sensorwerten entsprechenden Sensorsignale einem Dämpferregler zugeführt werden und der Dämpferregler wenigstens ein Steuersignal zur Ansteuerung von Aktuatoren, insbesondere semi-aktiven oder aktiven Dämpfern, liefert, mittels denen die Bewegung des Fahrzeugaufbaus beeinflusst werden kann, wobei mittels des Dämpferreglers aus gemessenen vertikalen Geschwindigkeiten an den Enden des Fahrzeugaufbaus eine Hub-, und Wank- und Nickbewegung des Fahrzeugaufbaus berechnet wird, **dadurch gekennzeichnet, dass** der Dämpferregler die Hub-, und Wank- und Nickbewegung um einen variablen Punkt des Fahrzeugaufbaus in Abhängigkeit der momentanen Bewegung des Fahrzeugaufbaus festlegt, wobei der Dämpferregler die Winkelgeschwindigkeit des Fahrzeugaufbaus um einen von der momentanen Bewegung des Fahrzeugaufbaus abhängigen Schwerpunkt des Fahrzeugaufbaus beeinflusst.

2. Verfahren nach Anspruch 1, **dadurch gekennzeichnet, dass** der Anteil einer der Modalbewegungen (Hub, Wanken oder Nicken) an der Gesamtbewegung entsprechend der von diesem Anteil abhängigen Festlegung des variablen Schwerpunkts (56) definiert wird, wobei sich die restlichen beiden Modalbewegungen aus der Gesamtbewegung minus der definierten Bewegung beziehungsweise der Gesamtbewegung im variablen Schwerpunkt (56) resultierend ergeben.

3. Verfahren nach Anspruch 1, **dadurch gekennzeichnet, dass** der Anteil des Hubes (Hub) an der Gesamtbewegung von vom Hubanteil abhängigen Berechnung eines variablen Schwerpunkts definiert wird und sich somit die Nick- und Wankbewegungen aus der Gesamtbewegung minus der Hubbewegung beziehungsweise der Gesamtbewegung im variablen Schwerpunkt resultierend ergeben.

4. Verfahren nach einem der oben genannten Ansprüche, **dadurch gekennzeichnet, dass** die Modalbewegungen (Hub, Wanken und/oder Nicken) des variablen bewegungsabhängigen Schwerpunkts (56) beziehungsweise der variablen Modalachsen (N, W) an definierbaren körperfesten Punkten des Fahrzeugaufbaus, vorteilhafterweise in Form von translatorischen Bewegungen an oder in der Nähe von Aktorangriffspunkten, berechnet werden.

5. Verfahren nach einem der oben genannten Ansprüche, **dadurch gekennzeichnet, dass** die Modalbewegungen (Hub, Wanken und/oder Nicken) des variablen bewegungsabhängigen Schwerpunkts beziehungsweise der variablen Modalachsen an einem definierten festen Punkt des Fahrzeugaufbaus, vorteilhafterweise in Form von translatorischen und rotatorischen Bewegungen am Schwerpunkt des statischen Körpers, bestimmt werden.

6. Verfahren nach einem der oben genannten Ansprüche, **dadurch gekennzeichnet, dass** ein Maximum an Hubanteilen aus der Gesamtbewegung des Fahrzeugaufbaus herausgerechnet wird und sich reine Nick - und/oder Wankbewegungen ohne Hubanteile ergeben.

7. Verfahren nach einem der oben genannten Ansprüche, **dadurch gekennzeichnet, dass** alle Hubanteile des Fahrzeugaufbaus in der Gesamtbewegung enthalten bleiben beziehungsweise der Hubanteil zu 0 gesetzt wird und sich mit Hubanteilen überlagerte Nick- und/oder Wankbewegungen ergeben.

8. Verfahren nach den Ansprüchen 6 und 7, **dadurch gekennzeichnet, dass** Nick- und/oder Wankbewegungen ohne Hubanteile und mit Hubanteile überlagerte Nick- und/oder Wankbewegungen, vorteilhafterweise in Form einer Linearkombination miteinander verknüpft werden.

## Claims

1. Method for generating signals for influencing the movement of a vehicle body, which can be open-loop or closed-loop controlled in its movement sequences, of a motor vehicle, wherein the movement of the vehicle body is determined by sensors, the sensor signals which correspond to the determined sensor values are fed to a damper regulator and the damper regulator supplies at least one control signal for actuating actuators, in particular semi-active or active dampers, by means of which the movement of the vehicle body can be influenced, wherein a lifting and rolling and pitching movement of the vehicle body is calculated at the ends of the vehicle body from measured vertical speeds, **characterized in that** the damper regulator specifies the lifting movement and rolling movement and pitching movement about a variable point of the vehicle body as a function of the instantaneous movement of the vehicle body, wherein the damper regulator influences the angular speed of the vehicle body about a centre of gravity of the vehicle body, which is dependent on the instantaneous movement of the vehicle body.

2. Method according to Claim 1, **characterized in that** the portion of one of the modal movements (lifting, rolling or pitching) of the total movement is defined in accordance with the specification of the variable centre of gravity (56) which is dependent on this portion, wherein the remaining two modal movements are obtained as a result of the total movement minus defined movement or the total movement at the variable centre of gravity (56).

3. Method according to Claim 1, **characterized in that** the portion of the lift (lift) in the total movement is defined by the calculation of a variable centre of gravity as a function of the lifting portion, and therefore the pitching movements and rolling movements are obtained as a result of the total movement minus the lifting movement or the total movement at the variable centre of gravity.

4. Method according to one of the abovementioned claims, **characterized in that** the modal movements (lifting, rolling and/or pitching) of the variable movement-dependent centre of gravity (56) or the variable modal axes (N, W) are calculated at definable points which are fixed in space on the vehicle body, advantageously in the form of translatory movements on or in the vicinity of actor engagement points.

5. Method according to one of the abovementioned claims, **characterized in that** the modal movements (lifting, rolling and/or pitching) of the variable movement-dependent centre of gravity or the variable modal axes are determined at a defined fixed point on the vehicle body, advantageously in the form of translatory and rotational movements at the centre of gravity of the static body.

6. Method according to one of the abovementioned claims, **characterized in that** a maximum of lifting portions in the total movement of the vehicle body is calculated, and pure pitching movements and/or rolling movements are obtained without lifting portions.

7. Method according to one of the abovementioned claims, **characterized in that** all the lifting portions of the vehicle body which are included in the total movement remain, or the lifting portion is set to 0, and pitching movements and/or rolling movements on which lifting portions are superimposed are obtained.

8. Method according to Claims 6 and 7, **characterized in that** pitching and/or rolling movements without lifting portions and pitching and/or rolling movements on which lifting portions are superimposed are advantageously linked to one another in the form of a linear combination.

## Revendications

1. Procédé destiné à générer des signaux pour agir sur le mouvement d'une structure de véhicule d'un véhicule automobile, pouvant être commandée ou régulée dans ses processus de mouvement, dans lequel le mouvement de la structure de véhicule est déterminé à l'aide de capteurs, les signaux de capteurs correspondant aux valeurs de capteurs déterminées sont acheminés vers un régulateur d'amortisseurs, et le régulateur d'amortisseurs délivre au moins un signal de commande pour la commande d'actionneurs, notamment d'amortisseurs semi-actifs ou actifs, au moyen desquels le mouvement de la structure de véhicule peut être influencé, dans lequel un mouvement de montée et de roulis et de tangage de la structure de véhicule est calculé au moyen du régulateur d'amortisseurs à partir de vitesses verticales mesurées aux extrémités de la structure de véhicule, **caractérisé en ce que** le régulateur d'amortisseur établit le mouvement de montée et de roulis et de tangage autour d'un point variable de la structure de véhicule en fonction du mouvement instantané de la structure de véhicule, dans lequel le régulateur d'amortisseurs agit sur la vitesse angulaire de la structure de véhicule autour d'un centre de gravité de la structure de véhicule, qui dépend du mouvement instantané de la structure de véhicule.

2. Procédé selon la revendication 1, **caractérisé en ce que** la partie de l'un des mouvements modaux (montée, roulis ou tangage), par rapport au mouvement global correspondant à l'établissement du centre de gravité variable (56), lequel établissement dépend de ladite partie, est définie, dans lequel les deux mouvements modaux restants sont obtenus en tant que résultat à partir du mouvement global moins le mouvement défini ou moins le mouvement global au centre de gravité variable (56).

3. Procédé selon la revendication 1, **caractérisé en ce que** la partie de la montée (montée) par rapport au mouvement global est définie par un calcul dépendant de la partie de la montée d'un centre de gravité variable et par conséquent, **en ce que** les mouvements de roulis et de tangage sont obtenus comme résultat à partir du mouvement global moins le mouvement de montée ou du mouvement global au centre de gravité variable.

4. Procédé selon l'une quelconque des revendications précédentes, **caractérisé en ce que** les mouvements modaux (montée, roulis et/ou tangage) du centre de gravité (56) variable dépendant du mouvement ou des axes modaux variables (N, W) en des points intrinsèques pouvant être définis de la structure de véhicule, de préférence sous la forme de mouvements de translation, sont calculés sur ou à proximité de points d'action des actionneurs.

5. Procédé selon l'une quelconque des revendications précédentes, **caractérisé en ce que** les mouvements modaux (montée, roulis et/ou tangage) du centre de gravité variable dépendant du mouvement ou des axes modaux variables, sont déterminés en un point fixe défini de la structure de véhicule, de préférence sous la forme de mouvements de translation et de rotation au centre de gravité du corps statique.

6. Procédé selon l'une quelconque des revendications précédentes, **caractérisé en ce qu'**un maximum d'une partie de montée est calculé à partir du mouvement global de la structure de véhicule et **en ce que** les mouvements de roulis et/ou de tangage proprement dits sont obtenus sans la partie de montée.

7. Procédé selon l'une quelconque des revendications précédentes, **caractérisé en ce que** toutes les parties de montée de la structure de véhicule restent contenues dans le mouvement global ou **en ce que** la partie de montée est mise à 0 et **en ce que** les mouvements de roulis et/ou de tangage sont obtenus avec superposition des parties de montée.

8. Procédé selon les revendications 6 et 7, **caractérisé en ce que** les mouvements de roulis et/ou de tangage sont combinés sans les parties de montée et **en ce que** les mouvements de roulis et/de tangage superposés aux parties de montée sont de préférence combinés les uns aux autres sous la forme d'une combinaison linéaire.
